# EUROPÄISCHE PATENTSCHRIFT

(11) **EP 3 022 082 B1**
(45) Veröffentlichungstag und Bekanntmachung des Hinweises auf die Patenterteilung: **06.02.2019**
(21) Anmeldenummer: 14739818.4
(22) Anmeldetag: 16.07.2014
(51) Int. Cl.: B60N 2/235, B60N 2/427, B60N 2/42, B60N 2/90, E05B 77/06, E05B 85/00, E05B 77/02, E05B 77/40, B60N 2/433

(54) **VERRIEGELUNGSMECHANISMUS MIT EINER ERHÖHTEN SICHERHEIT**
LOCKING MECHANISM WITH INCREASED SAFETY FEATURE
MÉCANISME DE VERROUILLAGE À HAUT NIVEAU DE SÉCURITÉ

(30) Priorität: 17.07.2013 DE 102013011875; 30.10.2013 DE 102013018183
(43) Veröffentlichungstag der Anmeldung: 25.05.2016
(73) Patentinhaber: Adient Luxembourg Holding S.à r.l., 1855 Luxembourg (LU)
(72) Erfinder: LINNENBRINK, Jörg, 42327 Wuppertal (DE); KIENKE, Ingo, 42929 Wermelskirchen (DE); VON BODENHAUSEN, Jörgen, 50939 Köln (DE); ROTHSTEIN, Gerhard, 42553 Velbert (DE); GRÜDL, Peter, 52428 Jülich (DE)
(74) Vertreter: Kutzenberger Wolff & Partner
(86) Internationale Anmeldenummer: PCT/EP2014/065223
(87) Internationale Veröffentlichungsnummer: WO 2015/007767

(56) Entgegenhaltungen:
- EP-A1- 1 867 808
- EP-A1- 2 141 312
- DE-A1-102004 021 516
- DE-A1-102004 025 475
- DE-A1-102010 044 941
- DE-B3-102006 058 151

## Beschreibung

Die vorliegende Erfindung betrifft einen Verriegelungsmechanismus in einem Kraftfahrzeug, bei dem zwei Elemente aneinander verriegelnd anliegen.
Derartige Verriegelungsmechanismen sind aus dem Stand der Technik bekannt und werden im Bereich von Autositzen beispielsweise dafür eingesetzt, die Rückenlehne an dem Sitzteil zu verriegeln. Dabei sollte der Verriegelungsmechanismus so vorgesehen sein, dass er sich unter normalen Betriebsbedingungen einfach öffnen lässt, bei einem Unfall aber sicher in seiner verriegelten Stellung verbleibt. Die Offenbarung DE102004021516 A1 zeigt einen derartigen Verriegelungsmechanismus. Es war deshalb die Aufgabe der vorliegenden Erfindung, einen derartigen Verriegelungsmechanismus zur Verfügung zu stellen.

Gelöst wird die Aufgabe mit einem Verriegelungsmechanismus gemäß Anspruch 1. Die vorliegende Erfindung betrifft einen Verriegelungsmechanismus in einem Kraftfahrzeug, insbesondere an einem Kraftfahrzeugsitz, beispielsweise um die Rückenlehne an dem Sitzteil des Fahrzeugsitzes oder an der Karosserie des Fahrzeuges zu befestigen. Derartige Verriegelungsmechanismen sind beispielsweise als Drehfalle oder Sperrklinke bekannt. Der Verriegelungsmechanismus kann von einem verriegelten in einen entriegelten Zustand und umgekehrt überführt werden. Der Verriegelungsmechanismus wird in einem Kraftfahrzeug sowohl mit Betriebslasten, d. h. Lasten, die beim Betrieb, auch beim unsachgemäßen Betrieb, auftreten, als auch gegebenenfalls mit Unfalllasten beansprucht und muss entsprechend ausgelegt sein. Unter Betriebslasten sollte der Verriegelungsmechanismus leicht zu öffnen sein und weist dafür vorzugsweise eine spezielle Schließkurve auf, bei der die Kraft, die zum Öffnen des Verriegelungsmechanismus aufgewendet werden muss, mit dem Abstand eines Elementes von der Verriegelungsstellung abnimmt. Bei einem Unfall muss sicher vermieden werden, dass ein Element die Verriegelungsstellung verlässt.
Erfindungsgemäß weist der Verriegelungsmechanismus mindestens zwei Elemente auf, die zumindest im verriegelten Zustand in einem Kontaktbereich aneinander anliegen. Weiterhin erfindungsgemäß weist zumindest ein Element, vorzugsweise beide Elemente, zumindest in dem Kontaktbereich eine Beschichtung auf, die sich unter der Unfalllast so verändert, dass sich der Kontaktbereich zwischen den beiden Elementen vergrößert und/oder dass sich der Reibkoeffizient zwischen den beiden Elementen erhöht.
Vorzugsweise weist die Beschichtung eine Oberfläche, die mit dem anderen Element in Kontakt ist, mit einem geringen Reibkoeffizienten auf, so dass der Verriegelungsmechanismus unter Betriebslasten vergleichsweise leicht zu öffnen ist.

Erfindungsgemäß weist die Beschichtung mehrere Lagen auf, wobei vorzugsweise die äußerste Lage unter Unfalllasten zumindest teilweise abgelöst und/oder zerstört wird und dadurch eine weitere Lage freigibt, durch die der Kontaktbereich, d. h. die Kontaktfläche, zwischen einem Element und der Beschichtung und/oder der Reibkoeffizient zwischen einem Element und der Beschichtung erhöht wird. Daraus resultiert bei einem Unfall ein verbesserter Form-, Kraft- und/oder Reibschluss zwischen den beiden Elementen, so dass sich diese allenfalls geringfügig relativ zueinander bewegen können. Beispielsweise weist die freigegebene Lage eine größere Oberflächenrauheit als die ursprünglich äußerste Lage auf.

Erfindungsgemäß weist die Beschichtung Hohlelemente, insbesondere Hohlkugeln, auf, die unter der Unfalllast von dem anliegenden Element zumindest teilweise zerstört werden, wodurch die Kontaktfläche zwischen diesem Element und der Beschichtung und/oder der Reibkoeffizient zwischen diesem Element und der Beschichtung vergrößert wird.
Vorzugsweise ist die Beschichtung ein Mehrlagensystem, insbesondere ein Zweilagensystem, beispielsweise mit einer vergleichsweise harten inneren und einer vergleichsweise weichen äußeren Lage. Ein Beispiel für eine vergleichsweise harte, innere Lage ist eine Nickel-Diamant-Beschichtung, die von einer Kunststoffschicht, beispielsweise Polyamid-Imid (PAI), als Gleitlack überzogen wird. Der Gleitlack sorgt für die vergleichsweise geringe Reibung zwischen der Beschichtung und dem anliegenden Element unter Betriebslasten. Vorzugsweise weist der Kunststoff ein Füllmittel, insbesondere ein anorganisches Füllmittel auf, so dass der Gleitlack bei Unfalllasten schneller kollabiert. Der dann erfolgende Kontakt zwischen dem Element mit der inneren Lage führt zu einem erhöhten Reibwert und/oder einem verbesserten Kraftschluss.
Die Lagen können auf jede beliebige, dem Fachmann geläufige Art und Weise aufgetragen, beispielsweise aus der Gasphase abgeschieden werden.

Im Folgenden wird die Erfindung anhand der Figuren 1 - 3 erläutert. Diese Erläuterungen sind lediglich beispielhaft und schränken den allgemeinen Erfindungsgedanken nicht ein.
- **Figur 1**: zeigt den erfindungsgemäßen Verriegelungsmechanismus.
- **Figuren 2 und 3**: zeigen Beispiele der Gestaltung der Oberflächenbeschichtung.

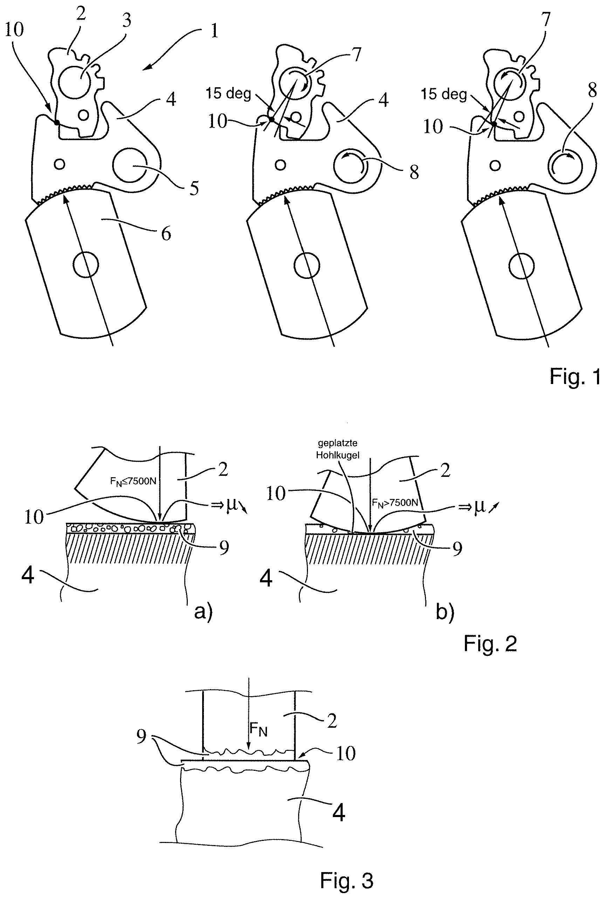

Figur 1 zeigt die erfindungsgemäße Verriegelung in drei unterschiedlichen Zuständen. Der erfindungsgemäße Verrieglungsmechanismus 1 weist eine Halterung 6 auf, die beispielsweise an dem Sitzteil eines Fahrzeugsitzes angeordnet ist und die an ihrem einen Ende Form- und/oder Kraftschlussmittel in Form von Zähnen aufweist. Diese Form- und/oder Kraftschlussmittel wirken zum Verriegeln, beispielsweise der Rückenlehne eines Fahrzeugsitzes an dem Sitzteil, an dem die Halterung 6 befestigt ist, mit komplementären Form- und/oder Kraftschlussmitteln, hier Zähnen, die an dem zweiten Element 4, hier einer Rastklinke, vorgesehen sind, verriegelnd zusammen. Das zweite Element ist hier beispielsweise mit der Rückenlehne verbunden. Um diese Verriegelung lösen zu können, ist das zweite Element 4 drehbar um eine Drehachse 5 gelagert. Bei einer Drehung im Uhrzeigersinn wird der Form- und/oder Kraftschluss zwischen dem zweiten Element 4 und der Halterung 6 gelöst. Um das zweite Element, hier die Rastklinke 4, in ihrer verriegelnden Position zu sichern, weist der Verriegelungsmechanismus ein erstes Element 2, hier ein Sicherungsmittel, auf, das in einem Kontaktbereich 10 an dem zweiten Element 4 anliegt. Das erste Element 2 ist vorzugsweise an der Rückenlehne eines Fahrzeugsitzes, insbesondere drehbar, gelagert. Im linken Teil der Figur 1 ist die Anfangsstellung des Sicherungselementes relativ zu der Rastklinke dargestellt. Die Form- und/oder Kraftschlussmittel des zweiten Elementes 4, hier die Zähne, sind im Eingriff mit dem komplementären Form- und/oder Kraftschlussmittel der Halterung 6. Um die Sicherung zu verbessern, mögliches Spiel auszugleichen und/oder das zweite Element 4 in seiner Lage zu sichern, wird, wie durch den Pfeil 7 dargestellt, das erste Element 2 im Uhrzeigersinn verdreht, wodurch sich das zweite Element 4 gegen den Uhrzeigersinn dreht und dadurch der Form- und/oder Kraftschluss zwischen dem zweiten Element 4 und der Halterung 6 verbessert wird (vgl. Figur 1, mittlere Darstellung). Die Bewegung des zweiten Elementes ist durch den Pfeil 8 symbolisiert. Der Fachmann erkennt, dass sich bei einer Bewegung der beiden Elemente 2, 4 relativ zueinander auch der Kontaktbereich 10 zwischen dem ersten und dem zweiten Element 2, 4 verschiebt. Das Lösen des Form- und/oder Kraftschlusses zwischen dem zweiten Element 4 und der Halterung 6 ist in der rechten Abbildung von Figur 1 dargestellt. Dafür wird zunächst das erste Element 2 gegen den Uhrzeigersinn gedreht, was wiederum durch den Pfeil 7 symbolisiert ist. Dadurch wandert der Kontaktbereich zwischen dem ersten Element und dem zweiten Element ebenfalls gegen den Uhrzeigersinn und das zweite Element 4, das beispielsweise federbelastet ist, kann sich im Uhrzeigersinn um die Achse 5 drehen, so dass die Form- und/oder Kraftschlussmittel an dem zweiten Element 4 bzw. der Halterung 6 außer Eingriff gelangen. Vorzugsweise sind das erste und das zweite Element bzw. deren Kinematik so gestaltet, dass sich der Kontaktbereich entlang einer sogenannten Schließkurve bewegt, wobei die Kraft, die benötigt wird, um das erste Element relativ zu dem zweiten Element zu bewegen, mit dem Abstand von der eigentlichen Verriegelungsstellung (vgl. mittlere Darstellung) abnimmt.
Wie insbesondere den Figuren 2 und 3 entnommen werden kann, weist zumindest ein Element 2, 4, hier das zweite Element 4, eine Beschichtung 9 auf, die sich bei Lasten, die nur bei einem Unfall auftreten, so verändert, dass entweder der Reibkoeffizient µ zwischen dem Element 2 und der Beschichtung 9 und/oder der Kontaktbereich zwischen dem Element 2 und der Beschichtung 9 vergrößert wird. Dadurch steigt die Kraft, die benötigt wird, um das erste Element 2 so relativ zu dem zweiten Element 4 zu bewegen, dass dieses in eine entriegelnde Stellung gelangen kann. Dadurch wird einerseits ein ungewolltes Öffnen des Verrieglungsmechanismus 1 verhindert. Andererseits kann die ursprüngliche Oberfläche der Beschichtung mit einem vergleichsweise geringen Reibkoeffizienten versehen werden, so dass ein Öffnen und/oder Schließen des Verrieglungsmechanismus unter Betriebslast mit einem vergleichsweise geringen Kraftaufwand erfolgen kann.
Bei der Ausführungsform gemäß Figur 2 ist die Beschichtung zweilagig vorgesehen und weist in ihrer äußeren Lage eine gleitende Beschichtung mit einem vergleichsweise geringen Reibkoeffizienten auf. Kommt es nun zu einem Unfall, wird zumindest die Lage, die sich unterhalb der äußeren Lage befindet, eingedrückt, weil sie Hohlelemente, insbesondere Hohlkugeln, aufweist, die unter der Unfalllast zerbrechen und/oder plastisch deformiert werden. Dadurch erhöht sich, wie Figur 2b entnommen werden kann, der Kontaktbereich zwischen den beiden Elementen 2 und 4 und/oder der Reibkoeffizient zwischen den beiden Elementen steigt, weil beispielsweise die äußere Lage zumindest abschnittsweise abgelöst oder zerstört wird und die innere Lage der Beschichtung 9 einen höheren Reibkoeffizienten aufweist. Der Fachmann versteht, dass gegebenenfalls, in einer Ausführung, die nicht Teil der Ansprüche ist, auf die gleitende Beschichtungslage verzichtet werden kann, beispielsweise dadurch, dass die Oberfläche der Lage mit den zu zerbrechenden und/oder plastisch zu deformierenden Bestandteilen geglättet, beispielsweise poliert, wird und/oder der Binder zwischen den Bestandteilen einen geringen Reibkoeffizienten aufweist.

Figur 3 zeigt eine weitere Ausführungsform der Beschichtung des erfindungsgemäßen Verriegelungsmechanismus. In dem vorliegenden Fall weist mindestens ein, hier beide Elemente 2, 4 oder eine entsprechende Lage der Beschichtung eine vergleichsweise hohe Oberflächenrauigkeit auf, die von einer weiteren äußeren Lage, beispielsweise einer Kunststoffschicht, zumindest teilweise abgedeckt wird, so dass sich unter Betriebslasten ein vergleichsweise geringer Reibkoeffizient zwischen den beiden Elementen 2, 4 bzw. deren Beschichtungen 9 einstellt. Bei einem Unfall wird die äußere Lage der Beschichtung oder die Beschichtung insgesamt zumindest teilweise zerstört oder von den Elementen 2, 4 oder deren Beschichtung abgelöst, so dass die Lagen mit der höheren Rauigkeit miteinander in Kontakt kommen, so dass sich die Kontaktfläche zwischen den beiden Elementen 2, 4 und/oder der Reibkoeffizient zwischen den beiden Elementen erhöht. Der Fachmann versteht, dass es gegebenenfalls ausreicht, ein Element 2, 4 mit einer rauen Oberflächenbeschichtung und mit einer entsprechenden äußeren Lage zu versehen.

### Bezugszeichenliste:

- 1: Verriegelungsmechanismus
- 2: erstes Element, Sicherungsmittel
- 3: Drehachse des Sicherungsmittels
- 4: zweites Element, Rastklinke
- 5: Drehachse der Rastklinke
- 6: Halterung
- 7: Drehrichtung des Sicherungsmittels beim Ver- und Entriegeln
- 8: Drehrichtung der Rastklinke beim Ver- und Entriegeln
- 9: Oberfläche, Oberflächenbeschichtung
- 10: Kontaktbereich
- F_{N}: Normalkraft
- µ: Reibkoeffizient

## Patentansprüche

1. Verriegelungsmechanismus (1) für ein Kraftfahrzeug, bei dem zwei Elemente (2, 4) aneinander entlang eines Kontaktbereichs (10) anliegen und wobei die Elemente einer Betriebs- und einer Unfalllast ausgesetzt werden, wobei mindestens ein Element (2, 4) zumindest in dem Kontaktbereich eine Beschichtung (9) aufweist, die sich unter der Unfalllast so verändert, dass sich der Kontaktbereich (10) zwischen den beiden Elementen vergrößert und/oder dass sich der Reibkoeffizient zwischen den beiden Elementen erhöht, **dadurch gekennzeichnet, dass** die Beschichtung (9) mehrere Lagen aufweist, wobei die Beschichtung Hohlelemente, insbesondere Hohlkugeln, aufweist, die unter der Unfalllast zumindest teilweise zerstört werden, wodurch sich die Kontaktfläche zwischen den beiden Elementen und/oder der Reibkoeffizient zwischen dem Element (2) und der Beschichtung (9) vergrößert.

2. Verriegelungsmechanismus nach Anspruch 1, **dadurch gekennzeichnet, dass** die Beschichtung (9) eine Oberfläche mit einem geringen Reibkoeffizienten aufweist, so dass das Verriegelungselement unter Betriebslasten vergleichsweise leicht zu öffnen ist.

3. Verriegelungsmechanismus nach Anspruch 2, **dadurch gekennzeichnet, dass** das anliegende Element (2) bei einer Unfalllast die äußerste Lage der Beschichtung (9) zumindest teilweise ablöst und/oder zerstört und dadurch eine weitere Lage freigibt, an der dieses Element (2) dann anliegt.

4. Verriegelungsmechanismus nach Anspruch 3, **dadurch gekennzeichnet, dass** die freigegebene Lage eine größere Oberflächenrauheit als die ursprünglich äußerste Lage aufweist.

5. Verriegelungsmechanismus nach einem der voranstehenden Ansprüche, **dadurch gekennzeichnet, dass** die Beschichtung (9) ein Mehrlagensystem, insbesondere ein Zweilagensystem, mit einer vergleichsweise harten inneren und einer vergleichsweise weichen äußeren Lage ist.

6. Verriegelungsmechanismus nach Anspruch 5, **dadurch gekennzeichnet, dass** die vergleichsweise harte, innere Lage eine Nickel-Diamant-Beschichtung ist.

7. Verriegelungsmechanismus nach Anspruch 5 oder 6, **dadurch gekennzeichnet, dass** die vergleichsweise harte, innere Lage von einer Kunststoffschicht, vorzugsweise Polyamid-Imid (PAI), als Gleitlack überzogen ist.

8. Verriegelungsmechanismus nach Anspruch 7, **dadurch gekennzeichnet, dass** der Kunststoff der Kunststoffschicht ein Füllmittel, insbesondere ein anorganisches Füllmittel, aufweist, so dass die Kunststoffschicht, insbesondere der Gleitlack, bei einer Unfalllast schneller kollabiert.

## Claims

1. Locking mechanism (1) for a motor vehicle, in which two elements (2, 4) bear against each other along a contact region (10), and wherein the elements are exposed to an operating and an accident load, wherein at least one element (2, 4) has, at least in the contact region, a coating (9) which changes under the accident load in such a manner that the contact region (10) between the two elements is enlarged and/or that the coefficient of friction between the two elements increases, **characterized in that** the coating (9) has a plurality of layers, wherein the coating has hollow elements, in particular hollow balls, which are at least partially destroyed under the accident load, as a result of which the contact area between the two elements and/or the coefficient of friction between the element (2) and the coating (9) are/is enlarged.

2. Locking mechanism according to Claim 1, **characterized in that** the coating (9) has a surface with a low coefficient of friction, and therefore the locking element can be opened comparatively easily under operating loads.

3. Locking mechanism according to Claim 2, **characterized in that** the adjacent element (2) at least partially peels off and/or destroys the outermost layer of the coating (9) under an accident load and thereby releases a further layer, against which said element (2) then bears.

4. Locking mechanism according to Claim 3, **characterized in that** the released layer has a greater surface roughness than the originally outermost layer.

5. Locking mechanisms according to one of the preceding claims, **characterized in that** the coating (9) is a multi-layer system, in particular a two-layer system, with a comparatively hard inner layer and a comparatively soft outer layer.

6. Locking mechanism according to Claim 5, **characterized in that** the comparatively hard inner layer is a nickel and diamond coating.

7. Locking mechanism according to Claim 5 or 6, **characterized in that** the comparatively hard inner layer is covered by a plastics layer, preferably polyamide-imide (PAI), as an anti-friction finish.

8. Locking mechanism according to Claim 7, **characterized in that** the plastic of the plastics layer has a filling means, in particular an inorganic filling means, and therefore the plastics layer, in particular the anti-friction finish, more rapidly collapses under an accident load.

## Revendications

1. Mécanisme de verrouillage (1) pour un véhicule automobile, dans lequel deux éléments (2, 4) s'appliquent l'un sur l'autre le long d'une zone de contact (10) et dans lequel les éléments sont exposés à une charge de fonctionnement et à une charge d'accident, dans lequel au moins un élément (2, 4) présente au moins dans la zone de contact un revêtement (9), qui se modifie sous la charge d'accident de telle manière que la zone de contact (10) entre les deux éléments s'agrandisse et/ou que le coefficient de frottement entre les deux éléments augmente, **caractérisé en ce que** le revêtement (9) présente plusieurs couches, dans lequel le revêtement présente des éléments creux, en particulier des billes creuses, qui sont au moins partiellement détruits sous la charge d'accident, ce qui augmente la surface de contact entre les deux éléments et/ou le coefficient de frottement entre l'élément (2) et le revêtement (9).

2. Mécanisme de verrouillage selon la revendication 1, **caractérisé en ce que** le revêtement (9) présente une surface avec un faible coefficient de frottement, de telle manière que l'élément de verrouillage soit relativement aisé à ouvrir sous des charges de fonctionnement.

3. Mécanisme de verrouillage selon la revendication 2, **caractérisé en ce que** l'élément appliqué (2) écrase et/ou détruit au moins en partie la couche externe du revêtement (9) sous une charge d'accident et libère ainsi une autre couche, sur laquelle cet élément (2) vient alors d'appliquer.

4. Mécanisme de verrouillage selon la revendication 3, **caractérisé en ce que** la couche libérée présente une rugosité de surface plus élevée que la couche initialement externe.

5. Mécanisme de verrouillage selon l'une quelconque des revendications précédentes, **caractérisé en ce que** le revêtement (9) est un système à plusieurs couches, en particulier un système à deux couches, avec une couche interne relativement dure et une couche externe relativement molle.

6. Mécanisme de verrouillage selon la revendication 5, **caractérisé en ce que** la couche interne relativement dure est un revêtement en nickel-diamant.

7. Mécanisme de verrouillage selon la revendication 5 ou 6, **caractérisé en ce que** la couche interne relativement dure est recouverte d'une couche de matière plastique, de préférence de polyamide-imide (PAI), comme laque de glissement.

8. Mécanisme de verrouillage selon la revendication 7, **caractérisé en ce que** la matière plastique de la couche de matière plastique présente une matière de remplissage, en particulier une matière de remplissage organique, de telle manière que la couche de matière plastique, en particulier la laque de glissement, s'écrase plus rapidement sous une charge d'accident.
